# EUROPÄISCHE PATENTSCHRIFT

(11) **EP 0 642 935 B1**
(45) Veröffentlichungstag und Bekanntmachung des Hinweises auf die Patenterteilung: **18.12.1996**
(21) Anmeldenummer: 94112556.9
(22) Anmeldetag: 11.08.1994
(51) Int. Cl.: B60C 13/00, B32B 25/08, C08L 21/00, C08K 9/02

(54) **Gummiartikel mit basischen, aminischen, aromatischen Alterungsschutzmitteln und einer nichtschwarzen Fläche**
Rubber articles with a "non-black" surface containing basic aromatic aminic antiageing agents
Article en caoutchouc avec une surface non-noire contenant des agents aromatiques, aminiques, basiques protecteurs contre le vieillissement

(30) Priorität: 10.09.1993 DE 4330700
(43) Veröffentlichungstag der Anmeldung: 15.03.1995
(73) Patentinhaber: Continental Aktiengesellschaft, 30165 Hannover (DE)
(72) Erfinder: Mahling, Rolf, D-34497 Korbach (DE)

(56) Entgegenhaltungen:
- US-A- 4 461 795
- US-A- 5 058 647
- US-A- 5 135 797

## Beschreibung

Die vorliegende Erfindung betrifft einen Gummiartikel, insbesondere einen Reifen, eine Luftfeder oder einen Antriebsriemen, mit mindestens einem basischen, aminischen, aromatischen Alterungsschutzmittel und mit einer auf dem Gummiartikel befindlichen nicht-schwarzen Fläche (1) z.B. in Form von Buchstaben und/oder Zahlen und/oder Warenzeichen und/oder Bildern und/oder - z.B. bei Reifen - vollständigen Seitenwand.

Unter dem Begriff "nicht-schwarze Fläche" soll in der vorliegenden Patentanmeldung weiß und/oder farbig gestaltetes Material verstanden werden, dessen Zusammensetzung in der Anmeldung näher erläutert wird.

Gummiartikel werden zu ihrer Dekoration und/oder Kennzeichnung mit farblich gestalteten Flächen versehen. Diese Flächen können z. B. die Form von Buchstaben, Zahlen, Bilder oder Warenzeichen haben. Es ist aber auch möglich Seitenwände z. B. von Reifen vollständig mit solch nicht-schwarzen Flächen zu versehen.

Die nicht-schwarzen Flächen werden auf den Gummiartikel in der Regel nicht aufgeklebt, sondern aufvulkanisiert. Die nichtschwarzen Flächen werden dauerhaft mit dem Gummiartikel verbunden. Ein großes Problem wird durch die in jedem Gummiartikel üblicherweise enthaltenen Alterungsschutzmittel hervorgerufen:
Die üblichen Alterungsschutzmittel sind basisch, z.B. para-Phenylendiamine, und fungieren als Radikalfänger. Werden herkömmliche nicht-schwarze Flächen auf Gummiartikel aufgebracht, die basische Alterungsschutzmittel enthalten, so diffundieren allmählich die genannten Alterungsschutzmittel in die nicht-schwarze Fläche ein und reagieren an der sichtbaren Oberseite der nicht-schwarzen Fläche unter Lichteinwirkung mit dem in der Luft enthaltenen Sauerstoff. Infolge des aromatischen Charakters der üblichen Alterungsschutzmittel entstehen dunkel gefärbte Reaktionsprodukte. Die als Folge auftretenden Verfärbungen der nicht-schwarzen Fläche empfinden die Kunden als häßlich und sind deshalb vom Hersteller unerwünscht.

Es wurde bereits vorgeschlagen, den Gummiartikel, auf den die nicht-schwarze Fläche aufgebracht werden soll, ohne verfärbende Substanzen zu gestalten, was aber separate Herstellungsserien und teure Polymere erfordert, da der gleichermaßen preiswerte wie wirkungsvolle basische, aminische und aromatische Alterungsschutz dann ausgeschlossen ist.

Die dem Gummiartikel zugewandte Schicht der nicht-schwarzen Fläche kann aus sehr unpolaren Polymeren bestehen. Diese Schicht aus sehr unpolaren Polymeren erschwert die Diffusion der polaren Alterungsschutzmittel aus dem Gummiartikel an die Oberseite der nicht-schwarzen Fläche. Der Nachteil dieser Art von nicht-schwarzen Flächen liegt darin, daß eine Schicht aus sehr unpolaren Polymeren den Durchtritt der verfärbenden polaren Alterungsschutzmittel zwar drosselt, aber nicht verhindert. Demzufolge wird eine Verfärbung der hellen Fläche durch eine derartige Barriere nur verzögert, wobei diese Verzögerung nicht groß genug ist, um mit der Lebensdauer der der zu kennzeichnenden Gummiartikel zusammenzufallen.

Es ist bekannt, daß organische Disäuredihalogenide die Migration von Alterungsschutzmitteln vom Inneren einer Gummimischung zur Oberfläche verhindern (Derwent 87-194518/28 & JP-A-62 122 747). Dabei wird auch auf den Einsatz von haftenden Etiketten auf Reifen verwiesen.

Allerdings entsteht bei der Verwendung solcher Substanzen bei üblichen Vulkanisationstemperaturen flüchtiger Halogenwasserstoff. Dieser Halogenwasserstoff besitzt eine schädigende Wirkung auf Pflanzen und Tiere einschließlich den Menschen, insbesondere können deren empfindliche Atmungsorgane verätzt werden. Außerdem führt der entstandene Halogenwasserstoff zur Korrosion von Metallen, die großen Schaden an Geräten, Apparaturen und Ähnlichem verursacht.

Der Erfindung liegt die Aufgabe zugrunde, umweltfreundlich herstellbare Gummiartikel mit nicht-schwarzen Flächen, z.B. weißen oder farbigen Flächen, anzugeben, deren nicht-schwarze Flächen sich trotz Verwendung basischer, aminischer aromatischer Alterungsschutzmittel im Gummiartikel nicht verfärben.

Diese Aufgabe wird an gattungsgemäßen Gummiartikeln durch die Merkmale des kennzeichnenden Teils des Hauptanspruchs 1 gelöst.

Die vorliegende Erfindung geht von der Erkenntnis aus, daß eine aus Ionen aufgebaute Verbindung allenfalls sehr langsam migriert.

Der Erfinder hat ferner erkannt, daß die eingesetzten sauren anorganischen Substanzen (z. B. Phosphorsäure oder Gips) mit den basischen Alterungsschutzmitteln (z. B. Phenylendiaminen) aus Ionen bestehende Salze bilden. Diese sind nicht in der Lage an die Oberseite der aufgebrachten farbigen Fläche zu gelangen, wo sie ansonsten unter Lichteinwirkung mit Luftsauerstoff zu verfärbenden Reaktionsprodukten umgesetzt werden könnten. An der Oberfläche können sich diese Salze kaum bilden, weil hierzu Amine erforderlich wären, die aber in der Regel durch die tieferen Schichten der nicht-schwarzen Fläche abgefangen sind und umgesetzt sind zu den besagten migrationsunfähigen Salzen.

In einer vorteilhaften Ausführungsform der Erfindung ist die nicht-schwarze Fläche aus mehreren Schichten aufgebaut. Durch diesen mehrschichtigen Aufbau ist es möglich, die Acide auf mehrere verschiedene Schichten zu verteilen, wobei der Gehalt und/oder die Art der aciden anorganischen Bestandteile in den verschiedenen Schichten variieren kann.

In einer besonders bevorzugten Ausführungsform sind die aciden anorganischen Bestandteile der nicht-schwarzen Fläche in einer dem Gummiartikel zugewandten Schicht enthalten, so daß diese Schicht nach dem Aufbringen auf den Gummiartikel direkt an letzteren angrenzt. Bei dieser Ausführungsform ist die Farbbeständigkeit besonders stark, weil so die stärkste Barriere am weitesten von der sichtbaren Oberfläche entfernt angeordnet ist.

Es ist von besonderem Vorteil, wenn die aciden anorganischen Bestandteile acide Adsorbentien sind, wie gefällte Kieselsäure, acide Ruße und/oder Aluminiumhydroxid, wobei letztgenanntes mittels entsprechender Prozeßführung bei seiner Herstellung sauer eingestellt sein kann. Die Verwendung der genannten aciden Adsorbentien ist besonders vorteilhaft, weil außer den bereits erwähnten Neutralisationsreaktionen noch Adsorptionsvorgänge stattfinden, wodurch ein Durchtritt der Alterungsschutzmittel an die Oberseite der nicht-schwarzen Fläche zusätzlich erschwert wird.

In einer weiteren Ausführungsform der erfindungsgemäßen Gummiartikel mit nicht-schwarzer Fläche sind acide anorganische Bestandteile schwer flüchtiger anorganischer Säuren (Phosphorsäure, Schwefelsäure) und/oder deren Salze bei der Herstellung der nicht-schwarzen Fläche eingesetzt. Es ist dabei von besonderem Vorteil, wenn die genannten aciden Bestandteile in Depots, die von porösen Substanzen gebildet werden, enthalten sind. Diese porösen Substanzen sind vorzugsweise Zeolithe, Ruß, Aktivkohle und/oder Holzmehl.

Bei einer anderen Ausführungsform der erfindungsgemäßen Gummiartikel mit nicht-schwarzer Fläche besteht die dem Gummiartikel zugewandte äußerste Schicht der nicht-schwarzen Fläche vorzugsweise aus sehr unpolaren Polymeren, die den Durchtritt von polaren Substanzen durch diese Schicht zumindest erschweren. Die bereits hierdurch in an sich bekannter Weise nur vermindert durch diese Barriereschicht migrierenden Alterungsschutzmittel werden bei einer weiteren Migration bis an die sichtbare Oberseite der nicht-schwarzen Fläche durch erfindungsgemäß vorhandene acide anorganische Bestandteile abgefangen, so daß es nicht mehr zu störenden Verfärbungen kommen kann.

Nach einer bevorzugten Ausführungsform des erfindungsgemäßen Gummiartikels weisen die Ränder der sichtbaren Oberseite seiner nicht-schwarzen Fläche dynamisch belastbare, vorzugsweise dunkel gefärbte Bedruckungen auf. Die Bedruckungen bestehen vorzugsweise aus Naturkautschuk oder EPDM und dienen dazu, eventuell seitlich einwandernde Alterungsschutzmittel zu maskieren, da seitlich eintretende Alterungsschutzmittel nicht die gesamte nicht-schwarze Fläche durchdringen müssen und so, trotz vorhandener Barrieren oder acider Bestandteile an die Oberseite der nicht-schwarzen Fläche gelangen könnten, wo sie Verfärbungen hervorrufen würden.

Vorzugsweise ist zumindest eine Schicht der nicht-schwarzen Fläche vorvulkanisiert, besonders bevorzugt sind auch die Rand- und Motivbedruckungen vorvulkanisiert; so wird eine hinreichend verzerrungsarme Aufbringung der nicht-schwarzen Fläche auf einen Gummiartikelrohling begünstigt.

Für eine lange Haltbarkeit der nicht-schwarzen Fläche auf dem entsprechenden Gummigegenstand kann eine besondere Klebe- oder Haftschicht an der dem Gummiartikel zugewandten Seite (Unterseite) der nicht-schwarzen Fläche zweckmäßig sein. Diese Klebe- oder Haftschicht sollte aus einer dauerhaft klebenden und/oder vulkanisierbaren Polymerschicht, die einen Anteil an Polyterpenen enthält, vorzugsweise 20 bis 50 Masseprozent bestehen. Sie ermöglicht eine besonders gute Anbringung der nicht-schwarzen Fläche an bereits vulkanisierten Gegenständen, so daß eventuell auf eine Nachvulkanisation der Fügestelle zwischen nicht-schwarzer Fläche und Gummiartikel verzichtet werden kann. Es ist hierbei besonders zweckmäßig, wenn sich auf der Haftschicht der nicht-schwarzen Fläche eine Trägerfolie befindet, die die Haftschicht bei Lagerung und Transport vor Verunreinigungen schützt und eine bessere Handhabung beim Transport und bei der Aufbringung erlaubt.

Besonders vorteilhaft ist die Aufbringung von nicht-schwarzen Flächen auf Luftfedern, Antriebsriemen und/oder Reifen. Durch den Kontrast zu dem in der Regel schwarzen Gummiprodukt ist eine sehr gute optische Kennzeichnung der Produkte möglich. Aber auch für die farbliche Gestaltung von Seitenwänden von z. B. Reifen können solch nicht-schwarze Flächen verwendet werden. Das hat den Vorteil, daß keine extra angemischten hellen Kautschukmischungen hergestellt werden müssen. Diese haben häufig den Nachteil, daß die eingemischten Pigmente negativen Einfluß auf die mechanischen Eigenschaften des Vulkanisats besitzen. Durch die erfindungsgemäß hergestellten Gummiartikel (z.B. farblich gestaltete Reifenseitenwände) wird dieser Nachteil umgangen und gleichzeitig langfristig bessere optische Eigenschaften erzielt.

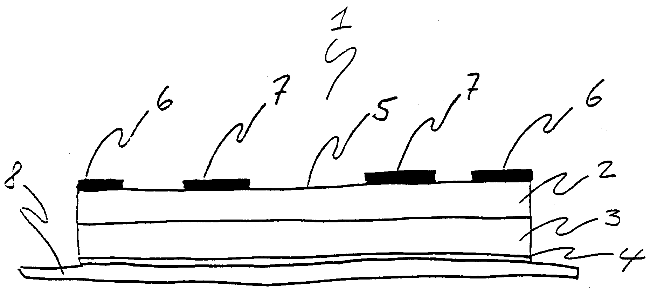

Im folgenden wird die Erfindung anhand des in der einzigen Figur dargestellten Querschnittes eines Ausführungsbeispiels näher erläutert:
Eine nicht-schwarze Fläche 1, die aus mehreren Schichten 2, 3, 4 aufgebaut ist, ist an ihrer äußeren Oberfläche 5 mit farbigen Aufdrucken 6 versehen. Die Schicht 2 besteht vorzugsweise aus dynamisch stabilen Polymeren und enthält erfindungsgemäß anorganische acide Bestandteile z. B. gefällte Kieselsäure, aciden Ruß und/oder Aluminiumhydroxid. Ebenso können in einer oder mehreren der Schichten 2 bis 4 poröse Stoffe wie Zeolithe, Ruß, Aktivkohle und/oder Holzmehl und/oder dergl. enthalten sein, die in ihren Poren acide anorganische Bestandteile, wie z. B. anorganische Säuren und/oder deren Salze enthalten.

Die dünnschichtigen Aufdrucke 6, 7 sind auf einer Schicht 2 aufgebracht und sind vorzugsweise, ebenso wie die Schicht 2, vorvulkanisiert. Die gefärbten Aufdrucke 6, sind an den seitlichen Rändern der dargestellten nicht-schwarzen Fläche 1 angeordnet, damit seitlich aus einem Gummiartikel in die nicht-schwarze Fläche 1 eindringende Alterungsschutzmittel nicht zur Oberseite durchtreten können, wo sie Verfärbungen hervorrufen würden.

Das dargestellte Ausführungsbeispiel weist eine Barriereschicht 3 auf, die bevorzugt aus einem unpolaren, zumindest aber möglichst unpolaren Polymer oder einer Polymermischung besteht. Da die die Verfärbungen verursachenden Alterungsschutzmittel aus dem Gummiartikel über eine gewisse Polarität verfügen, werden sie durch diese Barriereschicht 3 bei ihrer Diffusion in die nicht-schwarze Fläche 1 zumindest behindert. Bei anderen Ausführungsformen kann diese Barriereschicht 3 weiterhin auch die erfindungsgemäßen aciden anorganischen Bestandteile und/oder Adsorbentien enthalten.

Eine dauerhaft klebende, vulkanisierbare Haftschicht 4, die Polyterpene, bevorzugt 35 Masseprozent, enthält, dient zur dauerhaften Verbindung der nicht-schwarzen Fläche 1 mit dem entsprechenden Gummiartikel, insbesondere mit Reifen, Luftfeder oder Antriebsriemen. Eine an der Haftschicht 4 angrenzende Trägerfolie 8 hat den Zweck, die Haftschicht 4 der nicht-schwarzen Fläche 1 vor ihrem Aufbringen auf dem Gummiartikel vor Verunreinigungen zu schützen und die Handhabbarkeit der nicht-schwarzen Fläche 1 zu verbessern.

## Patentansprüche

1. Gummiartikel, insbesondere Reifen, Luftfeder oder Antriebsriemen, mit mindestens einem basischen, aminischen, aromatischen Alterungsschutzmittel und mit einer auf dem Gummiartikel befindlichen nicht-schwarzen Fläche (1) z.B. in Form von Buchstaben und/oder Zahlen und/oder Warenzeichen und/oder Bildern und/oder -z.B. bei Reifenvollständigen Seitenwand,
**dadurch gekennzeichnet**,
daß die nicht-schwarze Fläche (1) anorganische acide Bestandteile in Form von aciden Adsorbentien und/oder schwerflüchtigen anorganischen Säuren und/oder deren Salze enthält.

2. Gummiartikel nach Anspruch 1, dadurch gekennzeichnet, daß die aciden anorganischen Bestandteile seiner nicht-schwarzen Fläche (1) acide Adsorbentien gefällte Kieselsäure, acide Ruße und/oder Aluminiumhydroxid sind.

3. Gummiartikel nach Anspruch 1, dadurch gekennzeichnet, daß die schwerflüchtigen anorganischen Säuren z.B. Phosphorsäure, Schwefelsäure und/oder deren Salze sind.

4. Gummiartikel nach zumindest einem der Ansprüche 1 bis 3, dadurch gekennzeichnet, daß die aciden Bestandteile seiner nicht-schwarzen Fläche (1) in Depots aus porösen Substanzen enthalten sind.

5. Gummiartikel nach Anspruch 4, dadurch gekennzeichnet, daß die porösen Substanzen Zeolithe, Ruß, Aktivkohle und/oder Holzmehl sind.

6. Gummiartikel nach zumindest einem der vorhergehenden Ansprüche, dadurch gekennzeichnet, daß eine dem Gummiartikel zugewandte Polymerschicht (3) seiner nichtschwarzen Fläche (1) aus unpolaren Polymeren besteht, die den Durchtritt von polaren Substanzen durch die Polymerschicht (3) zumindest erschweren.

7. Gummiartikel nach zumindest einem der vorhergehenden Ansprüche, dadurch gekennzeichnet, daß auf den Rändern der sichtbaren Oberseite (5) seiner nicht-schwarzen Fläche (1) dynamisch belastbare, gefärbte Bedruckungen (6) angeordnet sind.

8. Gummiartikel nach zumindest einem der vorhergehenden Ansprüche, dadurch gekennzeichnet, daß sich an der Unterseite seiner nicht schwarzen Fläche (1) eine an sich bekannte dauerhaft klebende, vulkanisierbare Haftschicht (4) befindet, die Polyterpene enthält.

9. Gummiartikel nach zumindest einem der vorhergehenden Ansprüche, dadurch gekennzeichnet, daß seine nicht-schwarze Fläche (1) zumindest eine vorvulkanisierte Schicht, (z.B. Schicht 2), aufweist.

10. Gummiartikel nach zumindest einem der vorhergehenden Ansprüche, dadurch gekennzeichnet, daß in mehreren Schichten seiner nicht-schwarzen Fläche (1) anorganische acide Bestandteile eingebracht sind.

11. Nicht-schwarze Fläche (1) aus Gummi- und/oder Kunststoffschichten zum Aufbringen auf Gummiartikel,
**dadurch gekennzeichnet**,
daß sie anorganische acide Bestandteile enthält.

12. Nicht-schwarze Fläche (1) nach Anspruch 11, gekennzeichnet durch zumindest eines der kennzeichnenden Merkmale von zumindest einem der Ansprüche 2 bis 10.

13. Nicht-schwarze Fläche (1) nach Anspruch 11 oder 12, dadurch gekennzeichnet, daß eine Trägerfolie (8) auf der an der Unterseite der nicht-schwarzen Fläche (1) befindlichen Haftschicht (4) angeordnet ist.

## Claims

1. Rubber article, more especially a tyre, air spring or drive belt, having at least one basic, aminic, aromatic anti-oxidant and having a non-black area (1), which is situated on the rubber article, e.g. in the form of letters and/or numbers and/or trade marks and/or pictures and/or - e.g. with tyres - a complete side wall, characterised in that the non-black area (1) contains inorganic, acid ingredients in the form of acid adsorbents and/or substantially non-volatile inorganic - acids and/or their salts.

2. Rubber article according to claim 1, characterised in that the acid, inorganic ingredients of its non-black area (1) are acid adsorbents, precipitated silica, acid carbon blacks and/or aluminium hydroxide.

3. Rubber article according to claim 1, characterised in that the substantially non-volatile inorganic acids are, for example, phosphoric acid, sulphuric acid and/or their salts.

4. Rubber article according to at least one of claims 1 to 3, characterised in that the acid ingredients of its non-black area (1) are contained in deposits of porous substances.

5. Rubber article according to claim 4, characterised in that the porous substances are zeolites, carbon black, active carbon and/or sawdust.

6. Rubber article according to at least one of the preceding claims, characterised in that a polymer layer (3) of its non-black area (1) facing the rubber article comprises non-polar polymers which at least make it difficult for polar substances to pass through the polymer layer (3).

7. Rubber article according to at least one of the preceding claims, characterized in that dynamically loadable, coloured imprints (6) are disposed on the edges of the visible top side (5) of its non-black area (1).

8. Rubber article according to at least one of the preceding claims, characterised in that a permanently adherent, vulcanisable adhesive layer (4), known per se, is situated on the underside of its non-black area (1) and contains polyterpenes.

9. Rubber article according to at least one of the preceding claims, characterised in that its non-black area (1) has at least one prevulcanised layer (e.g. layer 2).

10. Rubber article according to at least one of the preceding claims, characterised in that inorganic acid ingredients are introduced in a plurality of layers of its non-black area (1).

11. Non-black area (1), which is formed from layers of rubber and/or plastics material and is to be applied to rubber articles, characterised in that it contains inorganic, acid ingredients.

12. Non-black area (1) according to claim 11, characterised by at least one of the characterising features of at least one of claims 2 to 10.

13. Non-black area (1) according to claim 11 or 12, characterised in that a supporting film (8) is disposed on the adhesive layer (4) situated on the underside of the non-black area (1).

## Revendications

1. Article en caoutchouc, en particulier des pneumatiques, des coussins d'air ou des courroies de transmission, contenant des agents aromatiques, aminiques, basiques protecteurs contre le vieillissement et présentant une surface non noire (1) déposée sur l'article en caoutchouc sous forme de lettres et/ou de chiffres et/ou de marques commerciales et/ou d'illustrations et/ou - sur les pneus, par exemple - d'une paroi latérale complète,
caractérisé en ce que la surface non noire (1) contient des composants acides inorganiques sous forme d'adsorbants acides et/ou d'acides inorganiques peu volatils et/ou les sels de ces composants.

2. Article en caoutchouc selon la revendication 1, caractérisé en ce que les composants acides inorganiques de sa surface non noire (1) sont des adsorbants acides, des acides siliciques précipités, des suies acides et/ou un hydroxyde d'aluminium.

3. Article en caoutchouc selon la revendication 1, caractérisé en ce que les acides inorganiques peu volatils sont, par exemple, des acides phosphoriques, des acides sulfuriques et/ou des sels de ces composants.

4. Article en caoutchouc selon l'une quelconque des revendications 1 à 3, caractérisé en ce que les composants acides de sa surface non noire (1) sont contenus sous forme de dépôts formés de substances poreuses.

5. Article en caoutchouc selon la revendication 4, caractérisé en ce que les substances poreuses sont le zéolithe la suie, le charbon actif et/ou la farine de bois.

6. Article en caoutchouc selon l'une quelconque des revendications précédentes, caractérisé en ce qu'une couche polymère (3) de sa surface non noire (1), face à l'article en caoutchouc, est constituée de polymères homopolaires, destinés au moins à rendre plus difficile le passage des substances polaires à travers la couche polymère.

7. Article en caoutchouc selon l'une quelconque des revendications précédentes, caractérisé en ce que des impressions (6) teintées, susceptibles de supporter des sollicitations dynamiques, sont disposées sur les bords de la face superficielle visible (5) de sa surface non noire (1).

8. Article en caoutchouc selon l'une quelconque des revendications précédentes, caractérisé en ce que la face inférieure de sa surface non noire (1) est revêtue d'une couche d'adhérence (4) qui peut être vulcanisée, adhésive en permanence, connue en soi, qui contient des polyterpènes.

9. Article en caoutchouc selon l'une quelconque des revendications précédentes, caractérisé en ce que sa surface non noire (1) est au moins revêtue d'une couche pré-vulcanisée (couche 2, par exemple).

10. Article en caoutchouc selon l'une quelconque des revendications précédentes, caractérisé en ce que des composants acides inorganiques sont insérés dans plusieurs couches de sa surface non noire (1).

11. Surface non noire (1), formée de couches de caoutchouc et/ou de couches de matière synthétique, à déposer sur des articles en caoutchouc, caractérisée en ce qu'elle contient des composants acides inorganiques.

12. Surface non noire (1) selon la revendication 11, caractérisée par au moins l'une des caractéristiques caractérisantes d'au moins une des revendications 2 à 10.

13. Surface non noire (1) selon la revendication 11 ou 12, caractérisée en ce qu'une pellicule support (8) est déposée sur la couche d'adhérence (4) se trouvant sur la face inférieure de la surface non noire (1).
